(19) Europäisches Patentamt
European Patent Office
Office européen des brevets

(11) **EP 1 793 333 A1**

(12) **EUROPEAN PATENT APPLICATION**

(43) Date of publication:
**06.06.2007 Bulletin 2007/23**

(51) Int Cl.:
***G06Q 10/00*** *(2006.01)*

(21) Application number: **05026258.3**

(22) Date of filing: **01.12.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **SAP AG**
**69190 Walldorf (DE)**

(72) Inventors:
• **Kasper, Thomas**
**69168 Wiesloch (DE)**

• **Göbelt, Mathias**
**69117 Heidelberg (DE)**
• **Braun, Heinrich**
**76199 Karlsruhe (DE)**
• **Schlüter, Frank**
**69181 Leimen - St. Illgen (DE)**

(74) Representative: **Röthinger, Rainer**
**Wuesthoff & Wuesthoff**
**Patent- und Rechtsanwälte**
**Schweigerstrasse 2**
**81541 München (DE)**

(54) **Automatic cost generator for use with an automated supply chain optimizer**

(57)    An automatic cost generation apparatus is provided for automatically converting user supplied definitions/requirements into cost parameters for use by a cost-based supply chain optimizer. In one example, this is achieved by generating a linear programming model that incorporates the requirements/definitions as a set of linear constraints. The linear programming model is automatically solved so as to yield a cost model, from which costs are extracted for use by the cost-based optimizer. By first formulating requirements/definitions as linear constraints within a linear programming model, the solution to the model therefore yields a cost model that satisfies the constraints, i.e. a cost model that satisfies the requirements. Hence, requirements/definitions initially provided by the user are thereby automatically converted into a cost model that incorporates costs that can be used during supply chain optimization. The user can therefore use the cost-based optimizer without first having to try to determine the various costs that correspond to his or her business requirements, which can be difficult.

FIG. 1

**Description**

**Field of the Invention**

The invention generally relates to computer-supported optimization techniques and more specifically to computer-implemented systems and methods for supply chain optimization.

**Background of the Invention**

Supply chain planning is essential to the success of many of today's manufacturing firms. Most manufacturing firms rely on supply chain planning in some form to ensure the timely delivery of products in response to customer demands. Typically, supply chain planning is hierarchical in nature, extending from distribution and production planning driven by customer orders, to materials and capacity requirements planning, to shop floor scheduling, manufacturing execution, and deployment of products. Supply chain planning ensures the smooth functioning of different aspects of production, from the ready supply of components to meet production demands to the timely transportation of finished goods from the factory to the customer.

One key aspect in the hierarchical supply chain planning approach is the generation of a mid-term production and distribution plan. This planning is commonly referred to as supply network planning (SNP), and the term SNP will be frequently used herein.

One particularly effective tool for supply chain planning is the Advanced Planner and Optimizer (APO) provided by SAP AG. APO belongs to the class of Advanced Planning Systems (APS) and covers all supply chain planning tasks. An integral part of APO is the Supply Network Planning Module. Within the SNP module, different planning methods are available, the most comprehensive being the SNP optimizer. Using the SNP module, a user, such as a supply chain planner or supervisor, generates and maintains an electronic SNP model that defines which entities of a supply chain should be planned and further specifies any constraints that should be respected during optimization.

The model also specifies one or more demands that should be met, either wholly or partially. Demands typically relate to the delivery of some number of products to a particular customer at a particular time. Also, the user generates and maintains a cost model, which is used by the optimizer for evaluating feasible supply chain solutions that meet all the demands subject to all the constraints while requiring minimal supply chain costs. A cost-based optimizer evaluates all feasible supply chain solutions and searches for a global solution that has a minimum cost evaluation. It should be noted here that the term "cost" does not - or at least not necessarily - relate to a monetary value but generally denotes a typically penalty-based parameter utilized by the optimization mechanism to find an optimal solution.

To actually use a cost-based optimizer, the user maintains a set of costs in a master database. Some users use real business costs, i.e. the actual costs associated with manufacturing, storing and transporting products, which are easily exploited by the optimizer. Other users, however, prefer to control the optimizer based on a set of user-specific definitions. That is, the user has some general idea of the optimization behaviour that is desired, e.g. what kind of resource should be preferred or how important safety stock is in comparison with demand satisfaction. However, such users often have trouble translating these definitions into cost parameters for use by the cost-based optimizer.

It is therefore an object of the present invention to provide an automated and computationally efficient technique for transforming user-specific definitions into cost parameters that are technically compatible with a cost-based optimizer.

**Summary of the Invention**

In one embodiment, the invention provides a method for use with an automated supply chain optimizer that optimizes a supply chain based on costs. The method operates to automatically convert non-cost-based definitions into costs for use with the optimizer. The method includes the steps of: providing a set of non-cost-based definitions; automatically generating a linear programming model that incorporates the definitions as a set of linear constraints; solving the linear programming model to yield a cost model; and extracting costs from the cost model for use with the optimizer.

In one example, the non-cost-based definitions are business requirements input as a set of business priorities and the like including one or more of: demand priorities, safety stock priorities; product priorities; production priorities; transport priorities; and product values. The business priorities may automatically be converted into a set of penalty costs and related costs including one of more of: non-delivery penalty costs; late delivery penalty costs; safety stock penalties; storage costs; production costs; product-specific transport costs; and procurement costs. The linear programming model may be configured to include one or more of the following parameters: production cost variables (LO), transportation cost variables (LT), procurement cost variables (LP), safety stock penalty variables (LC), storage cost variables (LS), late delivery cost variables (LL), non-delivery cost variables (NLP), maximum location-product supply chain cost (LN) variables, maximum slack supply chain cost (LNS) variables, and minimum location-product supply chain cost (LM) variables.

In one particular example, the linear programming model is solved to yield the cost model as follows. The linear programming model is first solved by maximizing, taking into account the constraints, all minimum location-product supply chain cost (LM) variables to determine the minimum supply chain costs. In a second step, the constraints of the linear programming model are modified by setting the storage cost variables (LS) on their solution values in accordance with the solutions obtained in the first step. Then, the target (or objective) function is modified. The new target function is the minimization of the sum over all maximum location-product supply chain cost (LN) variables plus the sum over all maximum slack supply chain cost (LNS) variables with a high coefficient (e.g. 1.000.000 or higher) to determine the maximum supply chain costs for the location-product. In a last step the assignment of cost variables is extracted from the optimum solution for use with the optimizer.

Further, in one example, the method further includes the steps of: providing cost master data; determining if an automatic generation of the cost model is requested or if else the cost master data are to be used by the optimizer; and ignoring the cost master data and generating the cost model immediately before calling the optimizer if the automatic generation of the cost model is requested. Also, when generating the cost model, a bandwidth between the highest cost and the lowest cost in the cost model may be controlled.

In another embodiment, the invention provides an automatic cost generation apparatus for use with a supply chain optimizer that optimizes a supply chain based on costs. The automatic cost generation apparatus operates to convert non-cost-based definitions such as business requirements into costs for use with the optimizer. The apparatus includes: a definitions unit operative to provide a set of non-cost-based definitions; a model generation unit operative to generate a linear programming model that incorporates the definitions as a set of linear constraints; a linear programming model solution unit operative to solve the linear programming model to yield a cost model; and a cost extraction unit operative to extract costs from the cost model for use with the optimizer.

The invention may also be embodied in a computer program product, which may be stored on a computer readable recording medium, comprising program code portions for performing any of the steps of the above-described methods when the computer program product is run on a computer system. The invention may further comprise an apparatus comprising a computer processor and a memory coupled to the processor, where the memory is encoded with one or more programs that may perform any of the steps of the above-described methods.

**Brief Description of the Drawings**

Further details, embodiments, modifications or enhancements of the invention may be obtained from consideration of the following description of various illustrative embodiments of the invention in conjunction with the drawings in which:

Figure 1 is a block diagram illustrating, at a high level, an automatic cost generation apparatus for use with a supply chain optimizer;

Figure 2 is a block diagram illustrating pertinent components of the automatic cost generation apparatus of Figure 1;

Figure 3 is a flow chart summarizing steps performed by the automatic cost generation apparatus of Figure 1; and

Figure 4 is a flow chart summarizing steps performed during the method of Figure 3 to solve the linear programming model to yield a cost model;

Figure 5 is a flow chart summarizing the use of the an automatic cost generation apparatus of Figure 1 in the context of an overall optimization procedure; and

Figure 6 is an exemplary display screen that may be presented during the procedure of Figure 5 to allow a user to activate the automatic cost generation apparatus and to specify various definitions for use by the apparatus.

**Detailed Description of Exemplary Embodiments of the Invention**

1. Overview of Automatic Cost Generation Apparatus

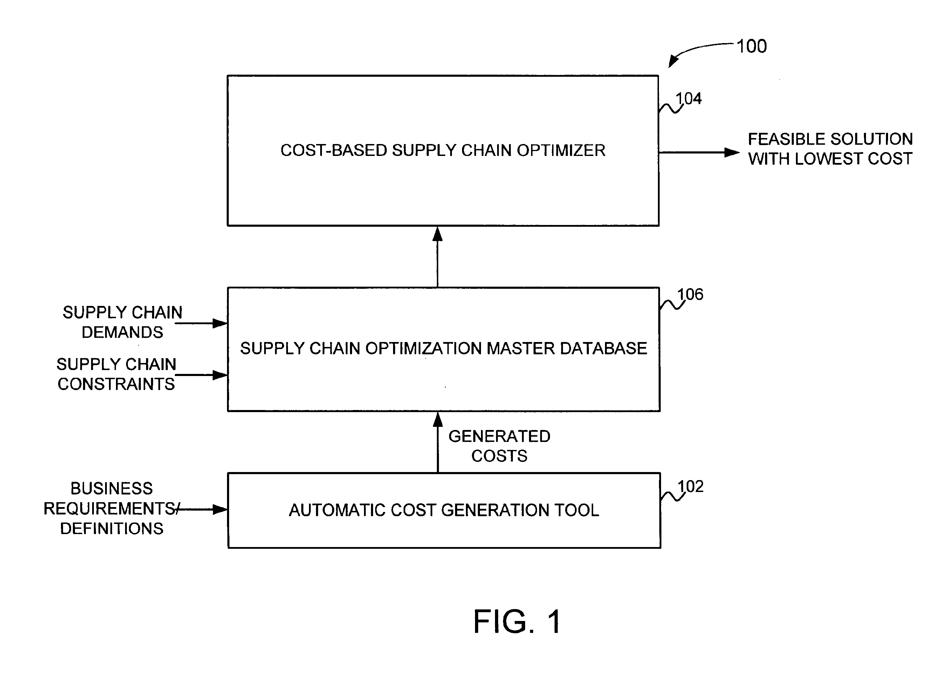

Figure 1 provides a high-level overview of a supply chain optimization computer system 100, which includes an automatic cost generation tool or apparatus 102 for converting non-cost-based definitions including business requirements into costs on behalf of a user for subsequent use by a cost-based supply chain optimizer 104. Briefly, a set of definitions, typically represented as a set of business priorities, is provided, e.g. by the user, to the automatic cost generation apparatus 102. The automatic cost generation apparatus 102 automatically converts the definitions into a set of costs for storage in a supply chain master database 106 along with a supply chain model for subsequent use by the optimizer 104. The optimizer then uses the costs and the model, along with a set of supply chain demands and constraints also provided by the user, to find a set of feasible solutions to the supply chain model that satisfies all of the demands subject to all of the constraints.

It should be noted here that a feasible solution need not necessarily satisfy all demands since demand satisfaction is a so-called "soft" constraint (which can be violated against penalties). Since the costs are to be minimized, the optimizer 104 tries to maximize demand satisfaction in accordance with the cost model.

Assuming a set of feasible solutions is found, the optimizer identifies and outputs the solution that has the lowest cost, i.e. an optimal solution from a cost standpoint. If the optimal solution identified by the optimizer does not satisfy the particular requirements (e.g. since the demand is not satisfied to the required degree), the user has to adapt the constraints and/or the cost model in order to arrive at an acceptable solution.

In any case, by automatically converting business requirements into costs for use by cost-based optimizer 104, the user thereby does not need to try to determine the costs that correspond to his or her business requirements, which can be difficult.

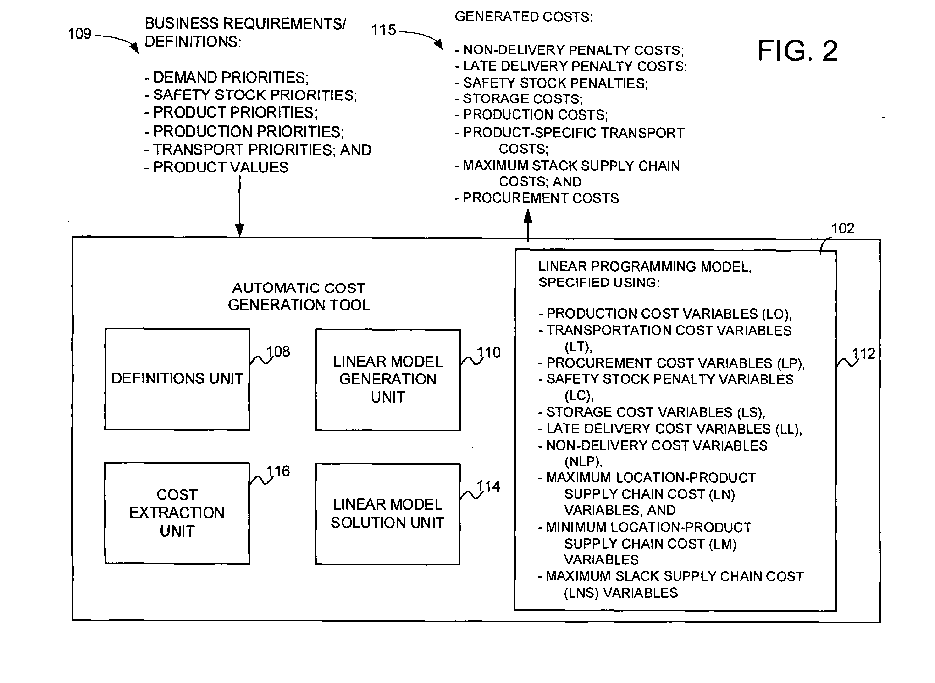

Turning now to Figure 2, pertinent components or sub-functions of the automatic cost generation apparatus 102 will now be described. The automatic cost generation apparatus 102 includes a definitions unit 108 that provides a set of non-cost-based definitions by, for example, inputting a set of business requirements 109 from the user. In the embodiment of Figure 2, the business requirements 109 include one or more of: demand priorities; safety stock priorities; product priorities; production priorities; transport priorities; and production values. Other requirements may be additionally or alternatively used.

A linear model generation unit 110 generates a linear programming model 112 that incorporates the various business requirements as a set of linear constraints. Alternatively, the linear model may be generated by another component of the overall system and merely accessed by the automatic cost generation apparatus 102. In the embodiment of Figure 2, linear model 112 uses one or more of the following model variables: production cost variables (LO), transportation cost variables (LT), procurement cost variables (LP), safety stock penalty variables (LC), storage cost variables (LS), late delivery cost variables (LL), non-delivery cost variables (NLP), maximum location-product supply chain cost (LN) variables, maximum slack supply chain cost (LNS) variables, and minimum location-product supply chain cost (LM) variables, all of which are defined more fully below. Other variables may be additionally or alternatively used.

A linear model solution unit 114 then solves the linear programming model so as to yield a cost model, which includes parameters representative of business costs. By first formulating definitions such as business requirements as linear constraints within a linear programming model, solving the model therefore yields a cost model that satisfies the constraints, i.e. a cost model that satisfied the business requirements. In other words, the business requests initially provided by the user are thereby automatically converted into a cost model that incorporates costs 115 for use with the cost-based optimizer. After the optimization, the generated costs are read from the linear programming solver as the parameter values of the individual linear programming variables.

In the embodiment of Figure 2, the costs include one or more of: non-delivery penalty costs; late delivery penalty costs; safety stock penalties; storage costs; production costs; product-specific transport costs; and procurement costs. Other costs may be additionally or alternatively represented within the cost model. As will be explained below, in addition to satisfying the business requirements while solving the linear programming model, certain stability, consistency, and reasonable business interpretation requirements or constraints are also preferably satisfied.

In any case, a cost extraction unit 116 then extracts the costs from the cost model for use in subsequent supply chain optimization procedures performed by supply chain optimizer 104 (Figure 1) based on various demands and constraints provided by the user.

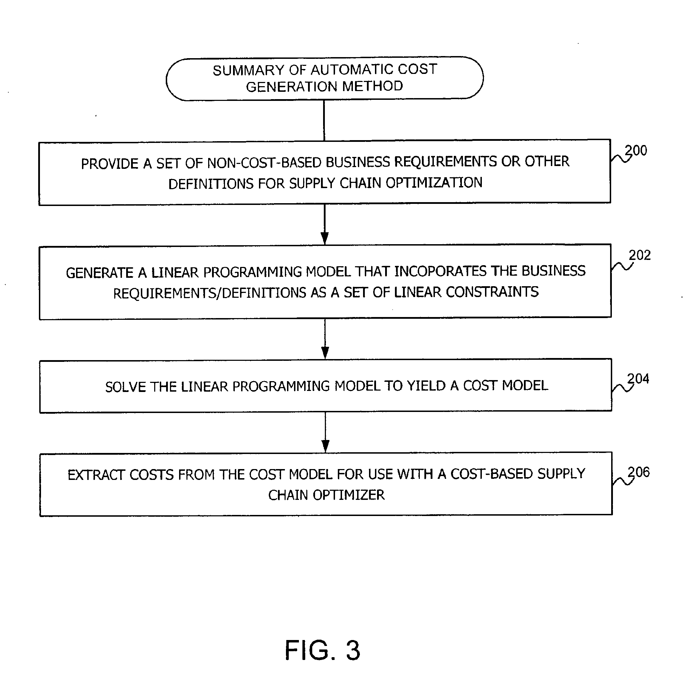

Figure 3 provides a brief summary of the automatic cost generation method performed by the automatic cost generation apparatus of Figure 2. Beginning at step 200, the automatic cost generation apparatus provides a set of non-cost-based business requirements or other definitions for use in supply-chain optimization using a cost-based supply chain optimizer. At step 202, the automatic cost generation apparatus then generates a linear programming model that incorporates the business requirements/definitions as a set of linear constraints. At step 204, the automatic cost generation apparatus solves the linear programming model so as to yield a cost model. At step 206, the automatic cost generation apparatus extracts costs from the cost model for use in subsequent supply-chain optimization using the cost-based supply chain optimizer.

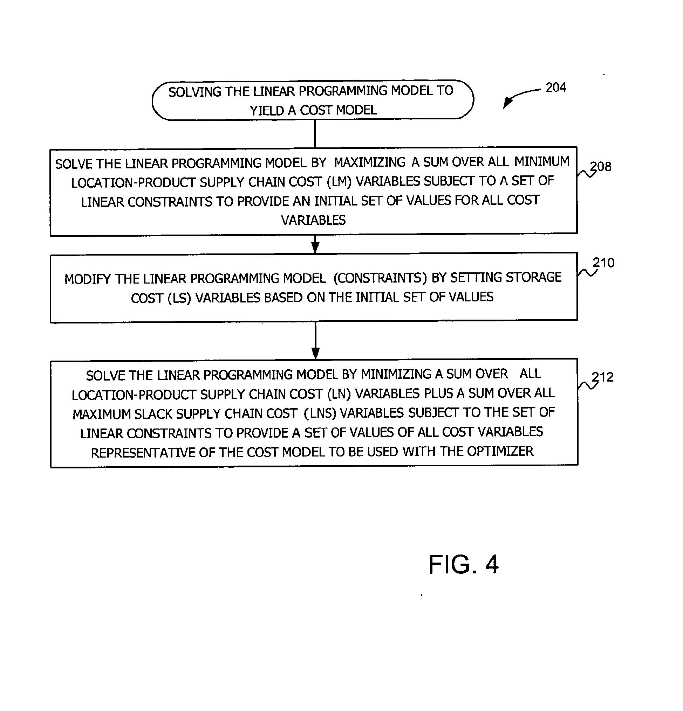

Figure 4 illustrates an exemplary technique for use by the linear model solution unit 114 of Figure 2 for solving the linear programming model at step 204 of Figure 3. Beginning at step 208, the linear model solution unit solves the linear programming model by maximizing a sum over all minimum location-product supply chain cost (LM) variables subject to the set of linear constraints so as to provide an initial set of values for all cost variables. At step 210, the linear model solution unit then modifies the linear programming model by setting storage cost (LS) variables based on the initial set of values. At step 212, the linear model solution unit solves the linear programming model once again, this time by minimizing a sum over all location-product supply chain cost (LN) variables plus a sum over all maximum slack supply chain cost (LNS) variables having a high coefficient (exceeding e.g. a predefined threshold) subject to the set of linear constraints so as to provide a set of values of all cost variables representative of the cost model to be used with the optimizer. This procedure will be described in greater detail below.

In the following, details regarding an exemplary implementation of the automatic cost generation apparatus of the invention will be provided. The automatic cost generation apparatus is described in connection with an implementation wherein the cost-based supply chain optimizer is the aforementioned APO provided by SAG AG, used in conjunction with a SNP/deployment optimizer also provided by SAG AG. The automatic cost generation apparatus is preferably implemented as a subcomponent of the SNP. In the following, the automatic cost generation apparatus is abbreviated as ACG. The automatic cost generation apparatus is also referred to a "cost configurator". In the following implementation, the linear programming model is generated by a "model generator" that is separate from the automatic cost generation apparatus.

## 2. Exemplary Implementation of the Automatic Cost Generation Apparatus

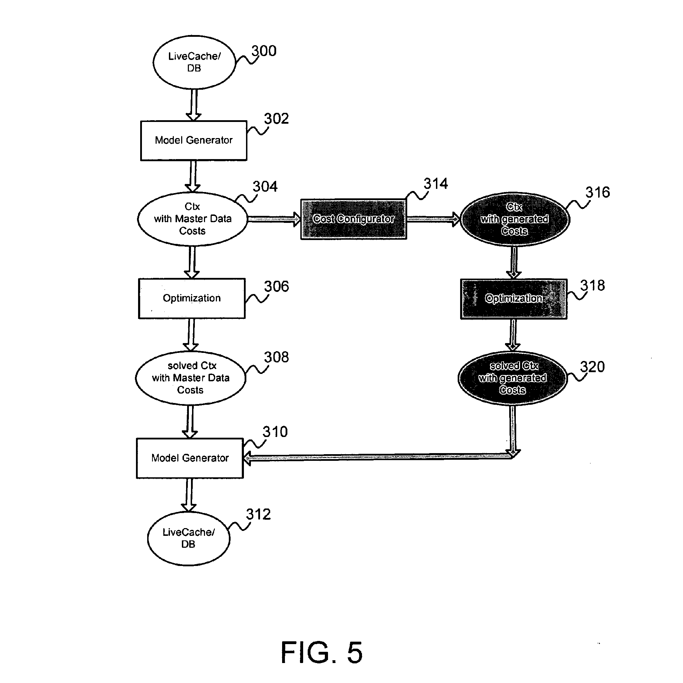

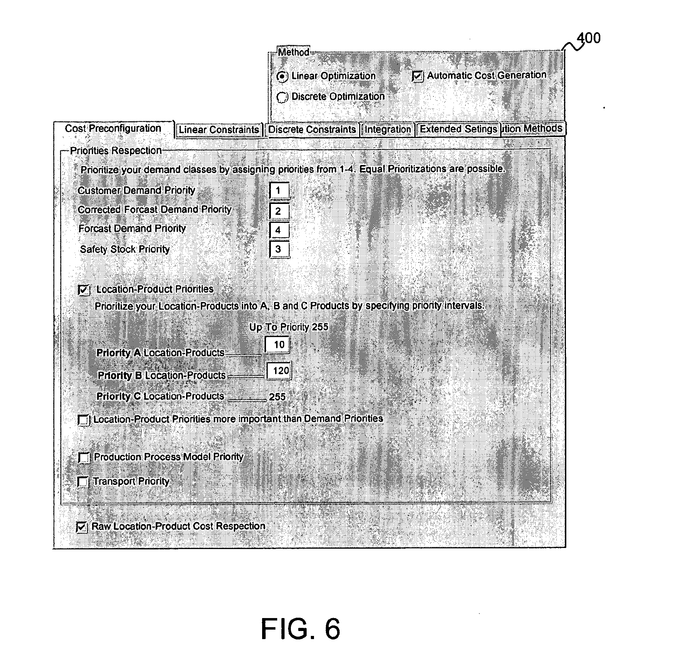

The ACG may be selectively activated by a user, as shown in Figures 5 and 6. If ACG is not activated, i.e. ACG is off, optimization proceeds using user supplied costs. If ACG is activated, i.e. ACG is on, then the ACG tool is utilized to generate costs for use in optimization.

Briefly, processing commences at step 300 of Figure 5 wherein data for use in generating a model is retrieved from a database. The database is preferably configured to utilize SAP livecache technology. At step 302, a core model is generated for use with a set of master costs. The core model is referred to herein as *ctx.* If the user already has costs that can be used as the master costs, i.e. if ACG is not needed, then the costs are input at step 304 and optimization is performed at step 306 to solve the core model subject the costs, i.e. *ctx* is solved to identify feasible solutions and then the solution having the lowest overall costs is selected, step 308. The solved *ctx* and the costs associated with the solved *ctx* are then applied to the model generator once again, at step 310, to extract data for storage in the database or livecache, step 312.

If however, the user does not have costs that can be used as the master costs, then the ACG is activated by the user at step 314 where a set of definitions such as business requirements are input by the user or are otherwise defined. The ACG solves the core model (*ctx*) so as to generate a set of generated costs, which are stored along with *ctx,* at step 316. Optimization is then performed at step 318 to solve the core model subject the generated costs. The solution to *ctx* having the lowest overall costs is selected, step 320. The solved *ctx and* the generated costs associated with the solved *ctx* are then applied to the model generator once again, at step 310, to extract data for storage in the database or livecache, step 312.

Hence, if ACG is *off*, standard control flow is used, i.e. the optimizer operates using the costs maintained in the master data. If ACG is *on* the costs from the master data will be ignored and just before the pure optimization will take place, ACG generates a cost model containing, for example, non-delivery penalties, late delivery penalties, safety stock penalties, storage costs, production costs, product-specific transport costs and procurement costs, etc., for the corresponding data objects involved in the optimization run. If costs are generated they are used for the optimization run. After the optimization, the generated costs are sent back to the application as part of the optimizer result such that they can be displayed in a report for user-inspection. The default mode is *off,* i.e. automatic cost generation is disabled.

Figure 6 illustrates a display screen 400 that may be presented to the user for selectively activating ACG and for inputting non-cost based definitions such as priorities. As can be seen, the user selects whether ACG is to be activated and also chooses the type of optimization, such as linear or discrete. The user also inputs a set of priorities, which may be specified by assigning relative priorities to customer demands, safety stock priorities, etc. The user further specifies certain location-product priorities and selects whether raw location-products are to be respected during cost generation. The various priorities and the manner by which location-product costs or other factors are respected will now be described, specifically with regard to an implementation of the ACG equipped for use with the SNP/deployment optimizer of SAP.

One of the most important applications for the SNP/deployment optimizer is to determine sourcing decisions. Often, these kinds of decisions involve *"trade-offs"* (e.g. should a demand be satisfied by production from the same location or should it be satisfied by an incoming transport or even by procurement). Usually, these alternatives are resolved by using the costs maintained by the user. In particular, the costs express the preferences of the alternatives. In this way, they directly express a part of the logics of the problem. Accordingly, the ACG makes it possible to prioritize sourcing alternatives. If a "make or buy" planning decision must be taken consisting of incoming transport, production alternative and a procurement alternative, ACG assigns the highest cost to the procurement alternative, since procurement is usually unrestricted. Furthermore, handling sourcing decisions are influenced by location-product values. ACG anticipates product values. For that purpose, it exploits the bill of material (BOM) based on costs for raw-products. For ACG, a location-product is a raw-product, if for the corresponding location, procurement or in-house production without input components is the only source of supply. In the SNP/deployment optimizer profile there preferably is a parameter for indicating to respect raw-product cost. If the parameter is disabled all raw-product costs are 1. The default value is preferrably "disabled" in order to have costs with minimal configuration effort (and for sake of simplicity). If the parameter is enabled, the maintained costs are used for the cost generation. Among other restrictions, the non-delivery costs influence whether a demand can be satisfied or not. For example, the optimizer may decide not to fulfill a demand since it is too costly (e.g. there is only one unit required but the minimum lot-size is 5000 units). If the ACG is active this kind of trade off cannot be reflected. Instead, the costs are derived in such a way that they trigger the optimizer to maximize the demand satisfaction (service level).

Since the optimizer performs fixed precision floating-point operations, the influence on the numeric properties of the cost model is respected. For this purpose, the ACG operates to provide that the bandwidth of the generated cost model has the property that the difference between the lowest and the highest cost (in orders of magnitude) is reasonably small. Depending upon the implementation, the ACG may write back the generated costs to the corresponding master data objects. Additionally or alternatively, the ACG generates a report containing the generated costs. In order to use the generated costs in the sense that the user can maintain them manually for the corresponding master data objects care is taken that the costs values are suited for mass maintenance when possible.

Insofar as priority is concerned, as already noted, it is possible to influence the cost model generation by priorities in order to express business or other logic with the costs. The configuration parameters are preferably part of the optimizer profile. In the ideal case, they are collected on a new tab in the optimizer profile maintenance transaction. In particular, ACG may exploit the field "Procurement Priority" of the product procurement area in the transportation lane maintenance of the SNP/deployment optimizer. As a consequence, a lane-product specific priority might be respected. The highest priority is 0. For two lane-products A and B with priority PA and priority PB and PA < PB, the lane-product costs (per unit of measure) for A will be lower than for B. In the SNP/deployment optimizer profile there is preferably a parameter to enable or disable to respect these transport priorities for cost generation. The default value should be *"disabled"*, i.e. do not respect priorities. The ACG also exploits the field "Procurement Priority" of production process model/production data structure (PPM/PDS). As a consequence PPM/PDS specific priorities are respected. The highest priority is 0. For two PPM/PDS A and B with priority PA and priority PB and PA < PB, the PPM/PDS costs (per unit of measure of the PPM/PDS master product) for A will lower than for B. In the SNP/deployment optimizer profile there is preferably also a parameter to enable or disable to respect these PPM/PDS priorities for cost generation. The default value is *"disabled'*, i.e. do not respect priorities. If a location-product can be produced by a PPM/PDS or transported from a different location then the production alternative should be higher prioritized than the transport in order to achieve behavior similar to the SNP heuristic.

The ACG is also preferably able to respect priority classes for demands (customer requirement, corrected forecast and forecast). In a usual ranking, *customer requirement* is more important than *corrected forecast* and the latter more important than *forecast.* For cost configuration, it is possible to maintain the ranking between them in an arbitrary way. In particular, it is possible to set importance of satisfying safety stock relative to the demand priority classes. If, for example, for a product A satisfying customer requirements is more important than forecast then the non-delivery penalty for demands for product A of type *customer requirement* will be higher than the non-delivery penalty of *forecast* demand for product A. In the SNP/deployment optimizer profile there preferably is also the possibility to rank the importance of the 3 priority classes and safety stock. The default values are that customer requirements are more important than corrected forecast which is more important than forecast which is more important than satisfying safety stock.

Additionally, there is preferably the possibility to give location-products a priority. For this purpose ACG respects the field "priority" of the location-product maintenance transaction. The highest priority is 1. For two location-products A and B with priority PA and priority PB and PA < PB, the non-delivery penalty for A will be higher than for B. Location-product priorities and priorities for demand classes are considered in a combined way. There are two alternatives possible: Location-product priorities are more important than demand classes or vice versa. In the SNP/deployment optimizer profile there is preferably the possibility to indicate whether product priorities should be more important than demand priority classes or vice versa. Graphically this is represented as follows:

|  | Customer demand | Corrected forecast | Forecast |
|---|---|---|---|
| **Product 1 Prio. 1** | Non-delivery Penalty P11 | Non-delivery Penalty P12 | Non-delivery Penalty P13 |
| **Product 2 Prio 2** | Non-delivery Penalty P21 | Non-delivery Penalty P22 | Non-delivery Penalty P23 |
| **Product 3 Prio 3** | Non-delivery Penalty P31 | Non-delivery Penalty P32 | Non-delivery Penalty P33 |
| **Product 4 Prio 4** | Non-delivery Penalty P41 | Non-delivery Penalty P42 | Non-delivery Penalty P43 |
| **...** | ... | ... | ... |

If the profile-parameter is enabled, i.e. if location-product-priorities are more important than demand priorities then the non-delivery penalties will satisfy P11 > P12 > P13 > P21 > P22 > P23 > P31 > P32 > P33 > P41 > P42 > P43 > ... If the parameter is disabled, i.e. demand classes are more important than location-product priorities the non-delivery penalties will satisfy P11 > P21 > P31 > P41 > ... > P12 > P22 > P32 > P42 > ... > P12 > 23 > P33 > P43. The default value for the parameter is *"disabled'*. In order to simplify the usage location-product priorities, location-products are preferrably grouped into A, B and C products. *Group A* location-products are more important than *B location products* which are more important than *C location-products.* In the SNP/deployment optimizer profile there is preferably the possibility to specify the A, B, C location products by defining the priority intervals for them.

Insofar as cost consistency is concerned, for generating a cost model, it is not sufficient to generate just "some costs" for the different costs types since unexpected behavior of the optimizer could be the consequence. The cost model generated by ACG therefore preferably satisfies the following constraints:

- The costs should not cause the optimizer start transport or production in order to save storage cost, i.e. produce or transport without satisfying demand.
- The non-delivery penalties should be high enough in order to trigger production in any case if there is demand. Non-delivery and late-delivery penalties should match in such a way that the optimizer should always prefer to deliver on time instead of delaying.
- The cost model should be independent of the time periodprofile.
- The cost model should be (rather) independent of transactional data. It may exploit calendars in order to find out production and transportation length but it should be invariant to demand or required safety stock quantities.

Preferably, the database tables for storing the SNP/deployment optimizer profiles are extended to additionally store information pertaining to:

- whether priorities for production, transport and location products are used
- priority intervals determining A, B and C location-products
- the relative priorities of the demand classes and safety stock
- a flag indicating the importance of demand classes relative to location-product priorities
- a flag indicating whether existing cost for raw materials should be respected for cost generation

Insofar as the model is concerned, as already noted, a linear programming approach is employed. The variables model the costs to be determined while the constraints describe the properties of the cost model:

- All cost model consistency rules are formulated as constraints/inequalities
- The objective function of the linear program drives the number sizes of the cost model to a small bandwidth.
- Exploiting the BOM and deriving safe non-delivery-penalties can be modeled directly via constraints

Note that when solving a linear program, no given I/O relationship between variables exist. Therefore the approach is naturally suited to complete a partial cost model since respecting costs corresponds to fixing the corresponding variables.

In one specific example, the following parameters are used:

- $T$ denotes the planning horizon in days
- $I_{ppm}$ *denotes* the set of input location-products of the PPM
- $J_{ppm}$ denotes the set of output location-products of the PPM
- $\Delta$ denotes a small constant (e.g. 0,1)
- lotsize(ppm, $p_j$) denotes the quantity of location-product $p_j$ that is consumed or produced if the PPM is applied 1 time.
- $\delta(l,l',a)$ denotes the maximum duration in days of all scheduled transports on lane a from location l to location l' in the planning horizon
- $\delta(ppm)$ denotes the maximum duration in days of all scheduled productions of ppm in the planning horizon

In the specific example, the following variables are defined:

- Production Cost Variables
  *LO(ppm) :* cost for production of 1 lot of the PPM/PDS master location - product of *ppm*

- Transportation Cost Variables
  *LT(l', l, a, p)* : cost for transporting 1 unit of measure of product *p* from *l* to *l'* using means of transport *a*

- Procurement Cost Variables
  *LP (l, p)* : cost for procuring 1 unit of measure of product *p* at location *l*

- Safety Stock Penalty Variables
  *LC(l, p): cost of product p at location l for violating safety stock by 1 unit of measure per day*

- Storage Cost Variables
  *LS(l, p) : cost for storing 1 unit of measure of product p at location l for 1 day(elem.time unit)*

- Location-Product Supply Chain Cost
  *LN (l, p) : sufficiently high non - delivery penalty for product p at location l*

- Late-Delivery Costs
  *LL(l, p, r) : penalty for delaying the delivery of product p at location l with rank r for 1 day*

- Non-Delivery Costs
  *LNP (l, p, r) penalty for non - delivery of product p at location l of rank r*

- Minimum Production Costs
  *LM (l , p) minimal production cost for product p at location*

- Maximum Slack Supply Chain Cost
  LNS(1,p): slack for maximum supply chain cost of product p at location l

In the specific example, the following constraints are imposed:

1. Ensure Production/Transport only if there is a demand to satisfy:
No transport should be activated due to cheaper target location storage costs

$$LT(l',l,a,p) \geq (T+1) \cdot (LS(l',p) - LS(l,p))$$

No production should be started due to cheaper storage costs of the output location-products

$$LO(ppm) \geq (T+1) \cdot (\sum_{i \in I} in(p_i, ppm) \cdot LS(l, p_i) - \sum_{j \in J} out(p_j, ppm) \cdot LS(l, p_j))$$

No transport should start to save storage costs by transporting

$$LT(l,l',a,p) \geq \delta(l',l,a) \cdot LS(l',p) + \Delta$$

No production should start to save storage cost while producing

$$LO(ppm) \geq \sum_{i \in I} (\delta(ppm, I, J) \cdot in(p_i) \cdot LS(l, p_i)) + \Delta$$

2. Ensure sufficiently high late/non-delivery penalties:
Ensure sufficient high internal supply chain cost to ensure that maximizing service level will work

$$LN(l, p_j) + LNSlack(l, p_j) \geq \frac{\sum_{i \in I_{PPM}} lotsize(ppm, p_i) \cdot LN(l, p_i) + LO(ppm)}{lotsize(PPM, p_j)} + T \cdot LS(l, p_j) + T \cdot \frac{\sum_{k \in J \setminus \{j\}} LS(l, p_k)}{lotsize(PPM, p_j)}$$

$$LN(l,p) + LNSlack(l,p) \geq LN(l',p) + LT(l',l,a,p) + T \cdot LS(l,p)$$

$$LN(l,p) \geq LP(l,p)$$

Derive correct non-delivery and late delivery penalties

$$LL(l,p,r) \geq LN(l,p)$$

$$LNP(l,p,r) \geq LL(l,p,r) \cdot (maxdelay_{l,p,d} + 1)$$

Derive correct safety stock cost

$$LC(l,p) \geq LS(l,p) + \Delta$$

$$LC(l,p) \geq LNP(l,p,r) + \Delta$$

3. Source Priority Constraints:

Let there be m sourcing alternatives based on production with $PPM_1,...,PPM_n$ and m further sourcing alternatives based on transport. Similar to the SNP Heuristic, the production alternatives dominate the transport alternatives. Furthermore, all priorities are respected locally, just to switch to the highest prioritized sourcing alternative in case that preceding production stages have similar costs.

$$\frac{LO(ppm_1)}{lotsize(ppm_1)} + \Delta \leq \frac{LO(ppm_2)}{lotsize(ppm_2)}$$

$$\mathbf{M}$$

$$\frac{LO(ppm_{m-1})}{lotsize(ppm_{m-1})} + \Delta \leq \frac{LO(ppm_m)}{lotsize(ppm_m)}$$

$$\frac{LO(ppm_m)}{lotsize(ppm_m)} + \Delta \leq LT(l_{i1},l,a_1,p)$$

$$LT(l_{i1},l,a_1,p) + \Delta \leq LT(l_{i2},l,a_2,p)$$

$$\mathbf{M}$$

$$LT(l_{in},l,a_n,p) + \Delta \leq LT(l_{in},l,a_n,p)$$

4. Additional Constraints:

The following constraints are used for defining storage costs. The LM variables define minimal production costs that are used in phase 2 in order to bound the storage cost.

If a location-product is produced at a location, then the minimum production cost will be the minimum off all production based sourcing alternatives:

$$LM(l,p) \leq \frac{\sum_{i \in I_{ppm}} lotisze(ppm, p_i) \cdot LM(l, p_i) + LO(ppm)}{lotsize(ppm, p)}$$

If a product is not produced at a location but can be transported to it then the minimum production costs will be the minimum production costs based on the transport based sourcing:

$$LM(l,p) \leq LM(l',p) + LT(l',l,a,p)$$

For raw-location-products LM is a constant:

$$LM(l,p) \leq \begin{cases} 1 & \text{if } l, p \text{ is a raw - product and raw product values should not be respected} \\ v & \text{if } l, p \text{ is a raw - product and raw product values should be respected} \end{cases}$$

Note that in case the problem for which costs should be generated contains shelf-life constraints the ACG provides a shelf-life penalty with reasonable value (e.g. maximum of all non-delivery penalties times 10) as default value.

Turning now to the specific steps performed to solve the model (summarized above with respect to Figure 4 and performed at step 314 of Figure 5), the procedure to derive a cost model is as follows:

- Solve the linear programming (LP) model defined above with the cost function of maximizing the sum over all minimum location-product supply-chain cost variables (LM)

- Modify the linear program by setting the lower and upper bound of all storage costs variables to the solution value obtained after the previous solution run

- Modify the objective function of the LP model such that the new objective is to minimize the sum over all location-product supply chain cost variables (LN) with a coefficient of one plus the sum over all maximum slack supply chain cost variables (LNS) with a big coefficient (e.g. 1.000.000).

- Solve the LP resulting from the previous step

- Based on the LP results compute the late-delivery and non-delivery costs for the different demand ranks resulting from demand priority classes and location-product priorities

Once these steps have been completed, the costs generated using these techniques are then used at steps 316 - 320 of Figure 5 to optimize the corresponding supply chain or for any other suitable purpose.

While the invention has been described with reference to preferred embodiments, those skilled in the art will understand that various changes may be made and equivalents may be substituted without departing from the scope of the invention. In addition, many modifications may be made to adapt a particular step or structure to the teachings of the invention without departing from its scope. Therefore, it is intended that the invention not be limited to the particular embodiment disclosed, but that the invention will include all embodiments falling within the scope of the appended claims.

## Claims

1. A method for use with an automated supply chain optimizer (104) that optimizes a supply chain based on costs, the method automatically converting non-cost-based definitions into costs for use by the optimizer (104), the method comprising:

providing (200) a set of non-cost-based definitions (109);

generating (202) a linear programming model (112) that incorporates the definitions (109) as a set of linear constraints;

solving (204) the linear programming model (112) to yield a cost model; and

extracting (206) costs (115) from the cost model for use with the optimizer (104).

2. The method of claim 1, wherein the linear programming model (112) is configured to include one or more of: production cost variables (LO), transportation cost variables (LT), procurement cost variables (LP), safety stock penalty variables (LC), storage cost variables (LS), late delivery cost variables (LL), non-delivery cost variables (NLP), maximum location-product supply chain cost (LN) variables, maximum slack supply chain cost (LNS) variables and minimum location-product supply chain cost (LM) variables.

3. The method of claim 2, wherein solving the linear programming model (112) to yield a cost model includes:

solving (208) the linear programming model by maximazing a sum over all minimum location-product supply chain cost (LM) variables subject to the set of linear constraints to provide an initial set of values for all cost variables;

modifying (210) the linear programming model by setting storage cost (LS) variables based on the initial set of values;

solving (216) the linear programming model by minimizing a sum over all location-product supply chain cost (LN) variables plus a sum over all maximum slack supply chain cost (LNS) variables having a high coefficient subject to the set of linear constraints to provide a set of values of all cost variables representative of the cost model to be used with the optimizer.

4. The method of claim 2 or 3, wherein extracting costs (115) from the cost model for use with the optimizer (104) includes extracting costs from the cost variables of the cost model.

5. The method of any one of claims 2 to 4, further including determining late delivery and non-delivery costs based on demand priorities and location-product priorities.

6. The method of any one of claims 2 to 5, wherein the set of constraints further include one or more of: production or transportation costs are generated only in response to a predetermined demand; and non-delivery penalties are high enough to trigger production if there is a demand.

7. The method of any one of the preceding claims, further comprising the steps of:

providing (304) cost master data;

determining (304) if an automatic generation of the cost model is requested or if else the cost master data are to be used by the optimizer; and

ignoring the cost master data and generating (314) the cost model immediately before calling the optimizer (318) if the automatic generation of the cost model is requested.

8. The method of any of the preceding claims, further comprising, when generating the cost model, controlling a bandwidth between the highest cost and the lowest cost in the cost model.

9. The method of claim 8, wherein the bandwidth is controlled such that a bandwidth threshold is not exceeded.

10. The method of any one of the preceding claims, wherein providing a set of non-cost-based definitions (109) includes inputting business requirements including one or more of: demand priorities; safety stock priorities; product priorities; production priorities; transport priorities; and product values.

11. The method of any one of the preceding claims, wherein extracting costs (115) from the cost model includes extracting one of more of: non-delivery penalty costs; late delivery penalty costs; safety stock penalties; storage costs; production costs; product-specific transport costs; and procurement costs.

12. A computer program product (102) comprising program code portions for performing the steps of claim 1 or 11 when the computer program product is run on a computer system.

**13.** The computer program product (102) of claim 12, wherein the computer program product is stored on a computer readable recording medium.

**14.** An apparatus (102) comprising a computer processor and a memory coupled to the processor, where the memory is encoded with one or more programs that may perform the steps of claims 1 to 11.

**15.** An automatic cost generation apparatus for use with a supply chain optimizer (104) that optimizes a supply chain based on costs, the apparatus automatically converting non-cost-based definitions into costs for use by the optimizer, the apparatus (102) comprising:

a definitions unit (108) operative to provide a set of non-cost-based definitions (109);
a model generation unit (110) operative to generate a linear programming model that incorporates the definitions (109) as a set of linear constraints;
a linear programming model solution unit (114) operative to solve the linear programming model to yield a cost model; and
a cost extraction unit (116) operative to extract costs (115) from the cost model for use with the optimizer (104).

EP 1 793 333 A1

100

COST-BASED SUPPLY CHAIN OPTIMIZER — 104

FEASIBLE SOLUTION
WITH LOWEST COST

SUPPLY CHAIN
DEMANDS

SUPPLY CHAIN
CONSTRAINTS

SUPPLY CHAIN OPTIMIZATION MASTER DATABASE — 106

GENERATED
COSTS

BUSINESS
REQUIREMENTS/
DEFINITIONS

AUTOMATIC COST GENERATION TOOL — 102

## FIG. 1

FIG. 2

109 → BUSINESS REQUIREMENTS/ 115 →
DEFINITIONS:

- DEMAND PRIORITIES;
- SAFETY STOCK PRIORITIES;
- PRODUCT PRIORITIES;
- PRODUCTION PRIORITIES;
- TRANSPORT PRIORITIES; AND
- PRODUCT VALUES

GENERATED COSTS:

- NON-DELIVERY PENALTY COSTS;
- LATE DELIVERY PENALTY COSTS;
- SAFETY STOCK PENALTIES;
- STORAGE COSTS;
- PRODUCTION COSTS;
- PRODUCT-SPECIFIC TRANSPORT COSTS;
- MAXIMUM STACK SUPPLY CHAIN COSTS; AND
- PROCUREMENT COSTS

102

AUTOMATIC COST
GENERATION TOOL

DEFINITIONS UNIT  108

LINEAR MODEL
GENERATION
UNIT  110

COST
EXTRACTION
UNIT  116

LINEAR MODEL
SOLUTION UNIT  114

LINEAR PROGRAMMING MODEL,
SPECIFIED USING:

- PRODUCTION COST VARIABLES (LO),
- TRANSPORTATION COST VARIABLES (LT),
- PROCUREMENT COST VARIABLES (LP),
- SAFETY STOCK PENALTY VARIABLES (LC),
- STORAGE COST VARIABLES (LS),
- LATE DELIVERY COST VARIABLES (LL),
- NON-DELIVERY COST VARIABLES (NLP),
- MAXIMUM LOCATION-PRODUCT SUPPLY CHAIN COST (LN) VARIABLES, AND
- MINIMUM LOCATION-PRODUCT SUPPLY CHAIN COST (LM) VARIABLES
- MAXIMUM SLACK SUPPLY CHAIN COST (LNS) VARIABLES

112

SUMMARY OF AUTOMATIC COST
GENERATION METHOD

PROVIDE A SET OF NON-COST-BASED BUSINESS REQUIREMENTS OR OTHER
DEFINITIONS FOR SUPPLY CHAIN OPTIMIZATION                    200

GENERATE A LINEAR PROGRAMMING MODEL THAT INCOPORATES THE BUSINESS
REQUIREMENTS/DEFINITIONS AS A SET OF LINEAR CONSTRAINTS        202

SOLVE THE LINEAR PROGRAMMING MODEL TO YIELD A COST MODEL        204

EXTRACT COSTS FROM THE COST MODEL FOR USE WITH A COST-BASED SUPPLY
CHAIN OPTIMIZER                                              206

FIG. 3

SOLVING THE LINEAR PROGRAMMING MODEL TO YIELD A COST MODEL — 204

SOLVE THE LINEAR PROGRAMMING MODEL BY MAXIMIZING A SUM OVER ALL MINIMUM LOCATION-PRODUCT SUPPLY CHAIN COST (LM) VARIABLES SUBJECT TO A SET OF LINEAR CONSTRAINTS TO PROVIDE AN INITIAL SET OF VALUES FOR ALL COST VARIABLES — 208

MODIFY THE LINEAR PROGRAMMING MODEL (CONSTRAINTS) BY SETTING STORAGE COST (LS) VARIABLES BASED ON THE INITIAL SET OF VALUES — 210

SOLVE THE LINEAR PROGRAMMING MODEL BY MINIMIZING A SUM OVER ALL LOCATION-PRODUCT SUPPLY CHAIN COST (LN) VARIABLES PLUS A SUM OVER ALL MAXIMUM SLACK SUPPLY CHAIN COST (LNS) VARIABLES SUBJECT TO THE SET OF LINEAR CONSTRAINTS TO PROVIDE A SET OF VALUES OF ALL COST VARIABLES REPRESENTATIVE OF THE COST MODEL TO BE USED WITH THE OPTIMIZER — 212

FIG. 4

FIG. 5

400

Method
(•) Linear Optimization        ☑ Automatic Cost Generation
○ Discrete Optimization

| Cost Preconfiguration | Linear Constraints | Discrete Constraints | Integration | Extended Setings | ution Methods |

Priorities Respection

Prioritize your demand classes by assigning priorities from 1-4. Equal Prioritizations are possible.

Customer Demand Priority          [1]

Corrected Forcast Demand Priority [2]

Forcast Demand Priority           [4]

Safety Stock Priority             [3]


☑ Location-Product Priorities

Prioritize your Location-Products into A, B and C Products by specifying priority intervals.

Up To Priority 255

Priority A Location-Products ————— [10]

Priority B Location-Products ————— [120]

Priority C Location-Products ————— 255

☐ Location-Product Priorities more important than Demand Priorities


☐ Production Process Model Priority

☐ Transport Priority


☑ Raw Location-Product Cost Respection

# FIG. 6

**European Patent Office**

## DECLARATION

which under Rule 45 of the European Patent Convention shall be considered, for the purposes of subsequent proceedings, as the European search report

**Application Number**

EP 05 02 6258

| | CLASSIFICATION OF THE APPLICATION (IPC) |
|---|---|
| The Search Division considers that the present application, does not comply with the provisions of the EPC to such an extent that it is not possible to carry out a meaningful search into the state of the art on the basis of all claims<br><br>Reason: | INV.<br>G06Q10/00 |

The claims relate to subject matter excluded from patentability under Art. 52(2) and (3) EPC. Given that the claims are formulated in terms of such subject matter or merely specify commonplace features relating to its technological implementation, the search examiner could not establish any technical problem which might potentially have required an inventive step to overcome. Hence it was not possible to carry out a meaningful search into the state of the art (Rule 45 EPC). See also Guidelines Part B Chapter VIII, 1-3.

The applicant's attention is drawn to the fact that a search may be carried out during examination following a declaration of no search under Rule 45 EPC, should the problems which led to the declaration being issued be overcome (see EPC Guideline C-VI, 8.5).

-----

| Place of search | Date | Examiner |
|---|---|---|
| Munich | 27 February 2006 | Breidenich, M |

EPO FORM 1504 (P04C37)